# EUROPEAN PATENT APPLICATION

(11) **EP 4 742 035 A1**
(43) Date of publication of application: **13.05.2026**
(21) Application number: 24855548.4
(22) Date of filing: 23.07.2024
(51) Int. Cl.: G06F 9/50

(54) **COMPUTING APPARATUS AND RELATED TASK EXECUTION SCHEDULING METHOD**

(30) Priority: 22.08.2023 CN 202311061280
(71) Applicant: Huawei Technologies Co., Ltd., Shenzhen, Guangdong 518129 (CN)
(72) Inventor: YU, Tianjun, Shenzhen, Guangdong 518129 (CN); MALLORY, Adam, Shenzhen, Guangdong 518129 (CN); HU, Xiameng, Shenzhen, Guangdong 518129 (CN)
(74) Representative: Grünecker Patent- und Rechtsanwälte PartG mbB
(86) International application number: PCT/CN2024/107058
(87) International publication number: WO 2025/039822

(57) **Abstract**

Embodiments of this application disclose a computing apparatus and a related task execution scheduling method. The computing apparatus may include a scheduling module, an interrupt controller, and at least one processor core. The scheduling module is configured to schedule N tasks. The interrupt controller is configured to schedule M interrupts. The N tasks and the M interrupts are marked by using unified priorities, one task corresponds to one priority, and one interrupt corresponds to one priority. A target processor core in the at least one processor core is configured to: receive and run a target task sent by the scheduling module, where the target task is one of the N tasks; and receive a target interrupt sent by the interrupt controller, and if a priority corresponding to the target interrupt is lower than or equal to a priority corresponding to the target task, continue to run the target task, where the target interrupt is one of the M interrupts. According to embodiments of this application, system performance and stability can be improved.

## Description

This application claims priority to Chinese Patent Application No. 202311061280.2, filed with the China National Intellectual Property Administration on August 22, 2023 and entitled "COMPUTING APPARATUS AND RELATED TASK EXECUTION SCHEDULING METHOD", which is incorporated herein by reference in its entirety.

### TECHNICAL FIELD

This application relates to the computer field, and in particular, to a computing apparatus and a related task execution scheduling method.

### BACKGROUND

As complexity of systems and applications increases, requirements for system resource allocation, interrupt handling, latency, user experience, power consumption, and the like also arise. If an existing system is not optimized, interruptions and/or scheduling problems and the like occur in some scenarios, resulting in system performance degradation, for example, prolonged execution, additional kernel entry/exit overheads, reduced determinism, and increased power consumption. In terminal scenarios, problems such as stalling, high power consumption, and shortened standby time are also caused. In scenarios with high real-time requirements, time constraints may be missed, leading to system operation failures and poor system stability. For example, in autonomous driving scenarios, the system is interrupted by unnecessary interrupts, causing increased system overheads, greater impact on time constraints of tasks such as road condition perception and autonomous driving, and even task failures. Therefore, how to optimize the system is a current and future research direction.

### SUMMARY

Embodiments of this application provide a computing apparatus and a related task execution scheduling method to improve system performance and stability.

According to a first aspect, an embodiment of this application provides a computing apparatus. The computing apparatus includes a scheduling module, an interrupt controller, and at least one processor core. The scheduling module is configured to schedule N tasks. The interrupt controller is configured to schedule M interrupts. The N tasks and the M interrupts are marked by using unified priorities, one task corresponds to one priority, one interrupt corresponds to one priority, and M and N are integers greater than 0. A target processor core in the at least one processor core is configured to: receive and run a target task sent by the scheduling module, where the target task is one of the N tasks; and receive a target interrupt sent by the interrupt controller, and if a priority corresponding to the target interrupt is lower than or equal to a priority corresponding to the target task, continue to run the target task, where the target interrupt is one of the M interrupts.

In this embodiment of this application, interrupts and tasks are marked by using unified priorities. If a priority corresponding to an interrupt is lower than or equal to the priority corresponding to the target task, the interrupt cannot interrupt the currently running task. The interrupt can interrupt the currently running task only when a unified priority corresponding to the interrupt is higher than the priority corresponding to the target task. In this way, integrity of running of a critical task is ensured. In the conventional technology, tasks and interrupts use independent priorities, and a priority of an interrupt is higher than a priority of any task by default. The interrupt can interrupt any running task, causing a problem that the interrupt unconditionally preempts a running critical task, and resulting in poor system stability. In this application, because tasks and interrupts are marked by using unified priorities, and only an interrupt with a priority higher than that of a task can interrupt the task, the interrupt does not arbitrarily interrupt a running critical task. In this way, a problem that an interrupt preempts any running task and prolongs an overall processing cycle of the critical task is resolved, and system performance and stability are improved.

In some embodiments, the target processor core is further configured to: if the priority corresponding to the target interrupt is higher than the priority corresponding to the target task, suspend the target task and run the target interrupt.

In this embodiment of this application, if the priority corresponding to the interrupt is higher than the priority corresponding to the target task, the interrupt may interrupt the currently running task, and then the target processor core may suspend the current task and run the interrupt, so that a computer system has a capability of responding to an emergency event, thereby improving working efficiency of the processor core.

In some embodiments, the scheduling module is further configured to: determine the target task from the N tasks, and determine, from the at least one processor core, the target processor core for the target task; and schedule the target task to the target processor core.

In this embodiment of this application, the scheduling module may determine, from a plurality of tasks based on priorities corresponding to the tasks, the target task that needs to be preferentially scheduled, and may select one from a plurality of processor cores as the target processor core for running the target task, thereby improving system performance and stability.

In some embodiments, the target processor core includes a priority register, and the target processor core is further configured to configure the priority corresponding to the target task into the priority register.

In this embodiment of this application, the processor core includes a priority register, and the priority register may be configured to store a priority of a task currently run by the processor core, so that when receiving an interrupt in a task running process subsequently, the processor core can determine importance of the interrupt and the task, and then determine whether the interrupt can interrupt the currently running task, thereby ensuring integrity of running of the critical task and improving system performance and stability.

In some embodiments, the target processor core is further configured to: when the target interrupt is received, compare the priority corresponding to the target interrupt with a priority currently stored in the priority register; and if the priority corresponding to the target interrupt is higher than the priority currently stored in the priority register, the priority corresponding to the target interrupt is higher than the priority corresponding to the target task; or if the priority corresponding to the target interrupt is lower than or equal to the priority currently stored in the priority register, the priority corresponding to the target interrupt is lower than or equal to the priority corresponding to the target task.

In this embodiment of this application, when the interrupt is received in a process of running the target task, the target processor core may compare the priority corresponding to the interrupt with the priority currently stored in the priority register, to determine importance of the interrupt and the currently running task, and then determine whether the interrupt can interrupt the currently running task, thereby ensuring integrity of running of the critical task and improving system performance and stability.

In some embodiments, the target processor core is specifically configured to: if the priority corresponding to the target interrupt is higher than the priority corresponding to the target task, update, to the priority register, the priority corresponding to the target interrupt; and suspend the target task and run the target interrupt.

In this embodiment of this application, when the target processor core receives the interrupt in the process of running the target task, and the priority corresponding to the interrupt is higher than the priority corresponding to the target task, it indicates that importance of the interrupt is higher than importance of the target task, and that the interrupt can interrupt the currently running target task. Then the priority corresponding to the interrupt may be updated to the priority register of the target processor core, and the target processor core suspends the target task and runs the interrupt, to ensure that the interrupt is not interrupted by another interrupt with a lower priority or a same priority in a process of running the interrupt, thereby ensuring logic correctness and improving system performance and stability.

In some embodiments, after the target processor runs the target interrupt, the target processor core is further configured to restore the priority in the priority register to the priority corresponding to the target task, and continue to run the target task.

In this embodiment of this application, after running the interrupt, the target processor core may restore the priority in the priority register to the priority corresponding to the target task, and then continue to run the target task, so that when a newly generated interrupt is received again in a subsequent process of running the target task, the target processor core may compare a priority corresponding to the newly generated interrupt with the priority currently stored in the priority register, to determine importance of the newly generated interrupt and the currently running task, and then determine whether the newly generated interrupt can interrupt the currently running task, thereby ensuring integrity of running of the critical task and improving system performance and stability.

In some embodiments, the target processor core is further configured to set the priority in the priority register to a lowest priority when the target processor core runs an idle task.

In this embodiment of this application, when the target processor core is in an idle state, the target processor core may run the idle-state task, and may set the priority in the priority register in the target processor core to the lowest priority, so that any interrupt can interrupt the currently running idle-state task, thereby improving system performance and stability.

In some embodiments, the target processor core is further configured to: when the target processor core runs the target interrupt, if an end-of-interrupt instruction is received, after retaining, within a preset time period, the priority corresponding to the target interrupt in the priority register, restore the priority in the priority register to the priority corresponding to the target task.

In this embodiment of this application, when running the target interrupt, the target processor core receives the end-of-interrupt instruction, and after retaining, within the preset time period, the priority corresponding to the target interrupt in the priority register, restores the priority in the priority register to the priority corresponding to the target task, so that the target interrupt is not interrupted by an interrupt or a task with a same priority or a lower priority within the preset time period, to ensure correctness and consistency of priorities during overall interrupt handling.

In some embodiments, the target interrupt includes indication information, and the indication information indicates the target processor core to run a first task, where a priority corresponding to the first task is higher than the priority corresponding to the target task, or a priority corresponding to the first task is lower than or equal to the priority corresponding to the target task, and the first task is one of the N tasks.

In this embodiment of this application, if an interrupt with a high priority carries information indicating running of a task with a low priority, the processor core still retains the priority corresponding to the interrupt, and runs the task with the low priority, thereby reducing unnecessary interruptions of a critical service, and improving system performance and stability.

According to a second aspect, an embodiment of this application provides a task execution scheduling method, applied to a computing apparatus. The computing apparatus includes a scheduling module, an interrupt controller, and at least one processor core. The scheduling module is configured to schedule N tasks. The interrupt controller is configured to schedule M interrupts. The N tasks and the M interrupts are marked by using unified priorities, one task corresponds to one priority, one interrupt corresponds to one priority, and M and N are integers greater than 0. The method includes: A target processor core in the at least one processor core receives and runs a target task sent by the scheduling module, where the target task is one of the N tasks; and receives a target interrupt sent by the interrupt controller, and if a priority corresponding to the target interrupt is lower than or equal to a priority corresponding to the target task, continues to run the target task, where the target interrupt is one of the M interrupts.

In some embodiments, if the priority corresponding to the target interrupt is higher than the priority corresponding to the target task, the target processor core suspends the target task and runs the target interrupt.

In some embodiments, the scheduling module determines the target task from the N tasks, and determines, from the at least one processor core, the target processor core for the target task; and schedules the target task to the target processor core.

In some embodiments, the target processor core includes a priority register, and the method further includes: The target processor core configures the priority corresponding to the target task into the priority register.

In some embodiments, when the target interrupt is received, the target processor core compares the priority corresponding to the target interrupt with a priority currently stored in the priority register; and if the priority corresponding to the target interrupt is higher than the priority currently stored in the priority register, the priority corresponding to the target interrupt is higher than the priority corresponding to the target task; or if the priority corresponding to the target interrupt is lower than or equal to the priority currently stored in the priority register, the priority corresponding to the target interrupt is lower than or equal to the priority corresponding to the target task.

In some embodiments, if the priority corresponding to the target interrupt is higher than the priority corresponding to the target task, that the target processor core suspends the target task and runs the target interrupt includes: If the priority corresponding to the target interrupt is higher than the priority corresponding to the target task, the target processor core updates, to the priority register, the priority corresponding to the target interrupt; and the target processor core suspends the target task and runs the target interrupt.

In some embodiments, after the target processor runs the target interrupt, the target processor core restores the priority in the priority register to the priority corresponding to the target task, and continues to run the target task.

In some embodiments, when the target processor core runs an idle task, the target processor core sets the priority in the priority register to a lowest priority.

According to a third aspect, this application provides a computer storage medium. The computer storage medium stores a computer program. When the computer program is executed by a processor, the method in any item of the second aspect is implemented.

According to a fourth aspect, this application provides a chip system. The chip system includes a processor configured to support an electronic device in implementing functions in the second aspect, for example, generating or processing information in the foregoing task execution scheduling method. In a possible design, the chip system further includes a memory. The memory is configured to store program instructions and data that are necessary for the electronic device. The chip system may include a chip, or may include a chip and another discrete component.

According to a fifth aspect, this application provides a computer program product. The computer program includes instructions. When the computer program is executed by a computer, the computer is enabled to perform the method in any item of the second aspect.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3 is a diagram of a system architecture combining software and hardware according to an embodiment of this application;
FIG. 4 is a diagram of a computing apparatus according to an embodiment of this application;
FIG. 5 is a diagram of task scheduling according to an embodiment of this application;
FIG. 6 is a diagram of unified priority assignment according to an embodiment of this application;
FIG. 7 is a diagram of system initialization according to an embodiment of this application;
FIG. 8 is a diagram of task scheduling by a system according to an embodiment of this application;
FIG. 9 is a diagram of interrupt scheduling according to an embodiment of this application;
FIG. 10 is a diagram of unified priority retention according to an embodiment of this application;
FIG. 11 is a diagram of unified priority inheritance according to an embodiment of this application; and
FIG. 12 is a schematic flowchart of a task execution scheduling method according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth" and so on are intended to distinguish between different objects but do not indicate a particular order. In addition, the terms "include", "have", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In this specification, reference to "embodiment" means that specific features, structures, or characteristics described with reference to the embodiment may be incorporated in at least one embodiment of this application. The term shown in various locations in the specification neither necessarily refers to a same embodiment, nor represents a separate embodiment or an alternative embodiment exclusive from another embodiment. It is explicitly and implicitly understood by persons skilled in the art that embodiments described in the specification may be combined with another embodiment.

To help understand embodiments of this application better, the following describes some terms in embodiments of this application.
1. Interrupt: An interrupt means that when an exception occurs during running of a computer and host intervention is required, the computer can automatically suspend a running program and switch to a program for handling a new situation, and after the handling is completed, return to the suspended program to resume running of the suspended program.

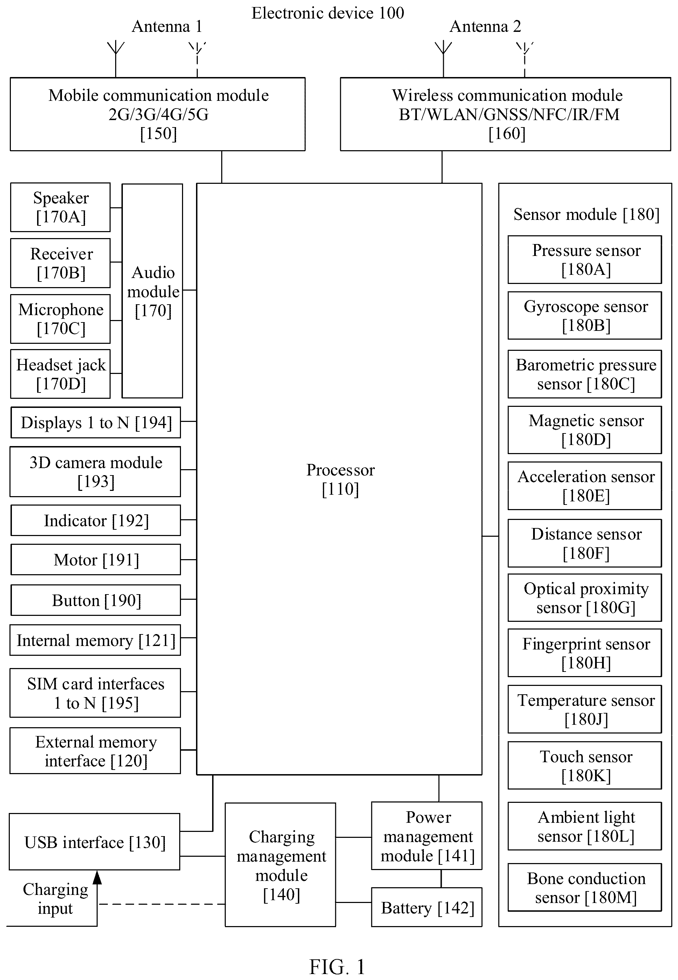

FIG. 1 is a diagram of a structure of an electronic device 100.

The electronic device 100 is used as an example below to describe embodiments in detail. It should be understood that the electronic device 100 may have more or fewer components than those shown in the figure, may combine two or more components, or may have different component configurations. Components shown in the figure may be implemented by hardware, software, or a combination of hardware and software that includes one or more signal processing and/or application-specific integrated circuits.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a 3D camera module 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

In some embodiments, the electronic device 100 may include a plurality of processors 110.

The controller may be a nerve center and a command center of the electronic device 100. The controller may generate an operation control signal based on an instruction operation code and a time sequence signal, to complete control over instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may invoke the instructions or the data directly from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The electronic device 100 implements a display function by using the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs, and the GPUs execute program instructions to generate or change display information.

The NPU is a neural-network (neural-network, NN) computing processor. With reference to a structure of a biological neural network, for example, a transmission mode between neurons in a human brain, the NPU quickly processes input information and can further continuously perform self-learning. Applications such as intelligent cognition of the electronic device 100, for example, image recognition, facial recognition, speech recognition, and text understanding, can be implemented by using the NPU.

The external memory interface 120 may be configured to connect to an external storage card, for example, a micro SD card, to extend a storage capacity of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 performs various function applications and data processing of the electronic device 100 by running the instructions stored in the internal memory 121. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 100. In addition, the internal memory 121 may include a high-speed random access memory, and may further include a nonvolatile memory, for example, at least one magnetic disk storage device, a flash memory, or a universal flash storage (universal flash storage, UFS).

A software system of the electronic device 100 may use a layered architecture, an event-driven architecture, a microkernel architecture, a micro service architecture, or a cloud architecture. In this embodiment of the present invention, an Android system with a layered architecture is used as an example to illustrate a software structure of the electronic device 100.

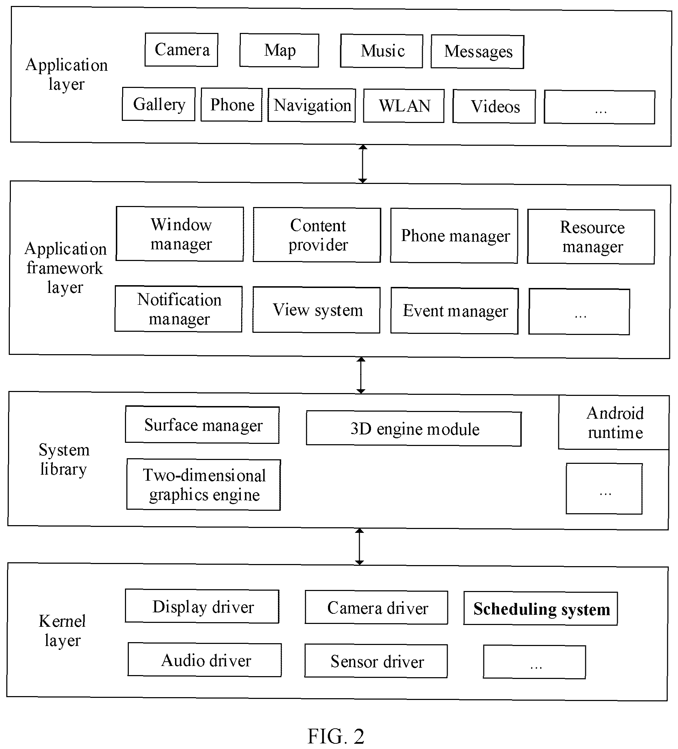

FIG. 2 is a block diagram of the software structure of the electronic device 100 according to an embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include application programs (or referred to as applications) such as Camera, Gallery, Calendar, Phone, Map, Navigation, WLAN, Bluetooth, Music, Videos, and Messages.

The application framework layer provides an application programming interface (application programming interface, API) and a programming framework for the applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and make the data accessible to an application. The data may include a video, an image, audio, calls made and answered, a browse history and bookmarks, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, call status management (including answering or ending a call, or the like).

The resource manager provides various resources such as a localized character string, an icon, an image, a layout file, and a video file for an application.

The notification manager enables an application to display notification information in the status bar, and may be configured to convey a notification message, which may automatically disappear after a short stay without requiring user interaction. For example, the notification manager is configured to notify download completion, give a message notification, and the like. The notification manager may alternatively display a notification in a form of a chart or a scrolling text in a status bar at the top of the system, for example, a notification of an application running in the background, or may display a notification in a form of a dialog interface on the screen. For example, text information is displayed in the status bar, an alert tone is played, the electronic device vibrates, or the indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, still image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver, and a scheduling system in this application.

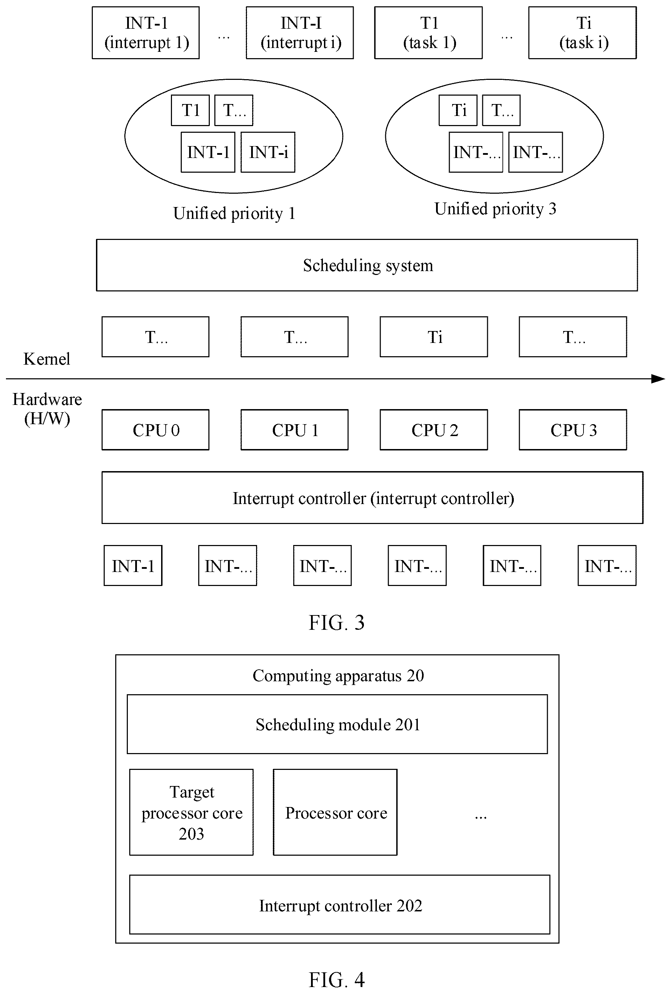

FIG. 3 is a diagram of a system architecture combining software and hardware according to an embodiment of this application. In FIG. 3, a kernel layer may include a scheduling system; and a hardware layer (Hardware, HW) may include one or more CPUs (FIG. 3 shows only four CPUs: a CPU 0, a CPU 1, a CPU 2, and a CPU 3), an interrupt controller, and a plurality of interrupt modules. The scheduling system may be configured to schedule a task based on a priority of the task. In this application, unified priorities may be assigned to a plurality of tasks and a plurality of interrupts in advance, so that the scheduling system can schedule, based on the unified priorities corresponding to the tasks, the task to a target CPU for running. The CPU may be configured to run a task. The CPU may further include a priority register. The priority register may be configured to store a priority of the current CPU. After determining the target CPU for the task, the scheduling system may write the unified priority corresponding to the task into the priority register of the target CPU, to indicate that the current priority of the target CPU is consistent with the unified priority of the task. Each interrupt module in the plurality of interrupt modules corresponds to a unified priority, and the unified priority corresponding to each interrupt module may indicate importance of an interrupt initiated by the interrupt module. The interrupt controller may be configured to receive an interrupt initiated by an interrupt module, and forward the interrupt to a corresponding target CPU. For ease of understanding, it is assumed that a value of a number may correspond to a unified priority. In this application, if the unified priority corresponding to the interrupt is equal to or lower than the current priority of the target CPU, the interrupt cannot interrupt the currently running task. The interrupt can interrupt the currently running task only when the unified priority corresponding to the interrupt is higher than the current priority of the target CPU. In this way, integrity of running of a critical task is ensured. In the conventional technology, tasks and interrupts use independent priorities, and a priority of an interrupt is higher than a priority of any task by default. The interrupt can interrupt any running task, causing a problem that the interrupt unconditionally preempts a running critical task, and resulting in poor system stability. In this application, because tasks and interrupts are scheduled by using unified priorities, and only an interrupt with a priority higher than that of a task can interrupt the task, the interrupt does not arbitrarily interrupt a running critical task. In this way, a problem that an interrupt preempts any running task and prolongs an overall processing cycle of the critical task is resolved, and system stability is improved.

FIG. 4 is a diagram of a computing apparatus according to an embodiment of this application. The computing apparatus 20 may include but is not limited to a scheduling module 201, an interrupt controller 202, and at least one processor core. The scheduling module 201 is configured to schedule N tasks. The interrupt controller 202 is configured to schedule M interrupts. The N tasks and the M interrupts are marked by using unified priorities, one task corresponds to one priority, one interrupt corresponds to one priority, and M and N are integers greater than 0.

A target processor core 203 in the at least one processor core is configured to: receive and run a target task sent by the scheduling module 201, where the target task is one of the N tasks; and receive a target interrupt sent by the interrupt controller 202, and if a priority corresponding to the target interrupt is lower than or equal to a priority corresponding to the target task, continue to run the target task, where the target interrupt is one of the M interrupts.

Specifically, a scheduling system may run on the scheduling module 201, and the scheduling system may be configured to schedule a task based on a priority of the task. In this application, interrupts and tasks are marked by using unified priorities. If a priority corresponding to an interrupt is lower than or equal to the priority corresponding to the target task, the interrupt cannot interrupt the currently running task. The interrupt can interrupt the currently running task only when a unified priority corresponding to the interrupt is higher than the priority corresponding to the target task. In this way, integrity of running of a critical task is ensured. In the conventional technology, tasks and interrupts use independent priorities, and a priority of an interrupt is higher than a priority of any task by default. The interrupt can interrupt any running task, causing a problem that the interrupt unconditionally preempts a running critical task, and resulting in poor system stability. In this application, because tasks and interrupts are marked by using unified priorities, and only an interrupt with a priority higher than that of a task can interrupt the task, the interrupt does not arbitrarily interrupt a running critical task. In this way, a problem that an interrupt preempts any running task and prolongs an overall processing cycle of the critical task is resolved, and system performance and stability are improved.

In some embodiments, the target processor core 203 is further configured to: if the priority corresponding to the target interrupt is higher than the priority corresponding to the target task, suspend the target task and run the target interrupt.

Specifically, if the priority corresponding to the interrupt is higher than the priority corresponding to the target task, the interrupt may interrupt the currently running task, and then the target processor core 203 may suspend the currently running task and run the interrupt, so that a computer system has a capability of responding to an emergency event, thereby improving working efficiency of the processor core.

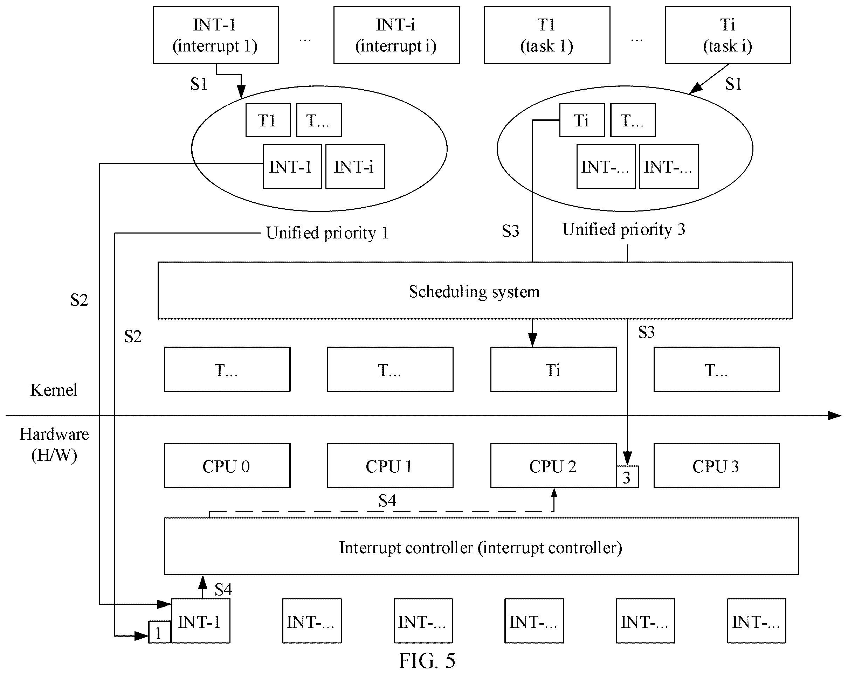

FIG. 5 is a diagram of task scheduling according to an embodiment of this application. A core procedure for task scheduling using unified priorities may include: A system assigns unified priorities, and establishes a relationship between the unified priorities, tasks, and interrupts (as shown in S1 in FIG. 5); an interrupt system initializes interrupts, and uses the unified priorities for initializing the interrupts (as shown in S2 in FIG. 5); when task switching is scheduled, a hardware priority of a processor core may be set based on a unified priority of a task (as shown in S3 in FIG. 5); and when an interrupt is triggered, whether the interrupt preempts a running task is determined (as shown in S4 in FIG. 5).

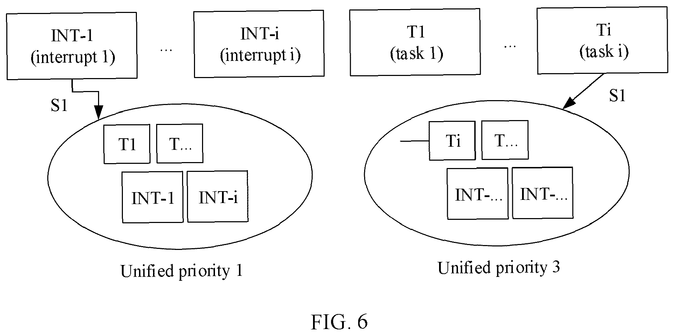

For example, unified priority assignment may be shown in FIG. 6. Unified priority mapping and integration are performed for tasks and interrupts in the system, to resolve a problem that priorities of different interrupts and tasks are inconsistent. A new unified priority has a relationship similar to a set relationship with tasks and interrupts. For example, a set of unified priority 1 may include a task T1, a task T..., an interrupt INT-1, an interrupt INT-i, and so on. A relationship between the interrupts and tasks and the unified priority may be statically configured or dynamically configured at runtime.

In some embodiments, an interrupt system driver layer may calculate a capability and a quantity of hardware priorities that can be assigned. In this application, software and hardware priorities are vertically integrated to implement overall logic. The hardware priority varies with an architecture. Generally, an architecture or an interrupt controller driver is required for implementation, for example, a priority mask register (Priority Mask Register, PMR) on an ARM or a task priority register (Task Priority Register, TPR) on an x86 architecture. A quantity of hardware priorities depends on platform implementation and may be obtained through calculation by writing to and reading from the PMR. It is assumed that a quantity of hardware priorities on a given platform is N.

In some embodiments, unified priorities may be created based on criticality levels of tasks and interrupts. Assuming that the N hardware priorities are {HP1, HP2, HP..., HPn} in ascending order, the system may create N equivalent unified priorities {UP1, UP2, UP..., UPn} corresponding to the hardware priorities. Different from task priorities, the unified priorities are at a critical level. Generally, two to eight unified priorities can meet requirements of most scenarios and can be used together with conventional task priorities. It should be noted that how many unified priorities need to be created for each scenario depends on a service. For example, in a real-time scenario, two unified priorities are generally set, and are respectively a critical real-time task (UP2, higher priority), and another or a default priority (UP1, lower priority). In an interactive application scenario, for example, a terminal or a desktop system, three unified priorities are generally set: an interactive real-time task (highest priority, UP3), performance or default (higher priority, UP2), and background (lower priority, UP1).

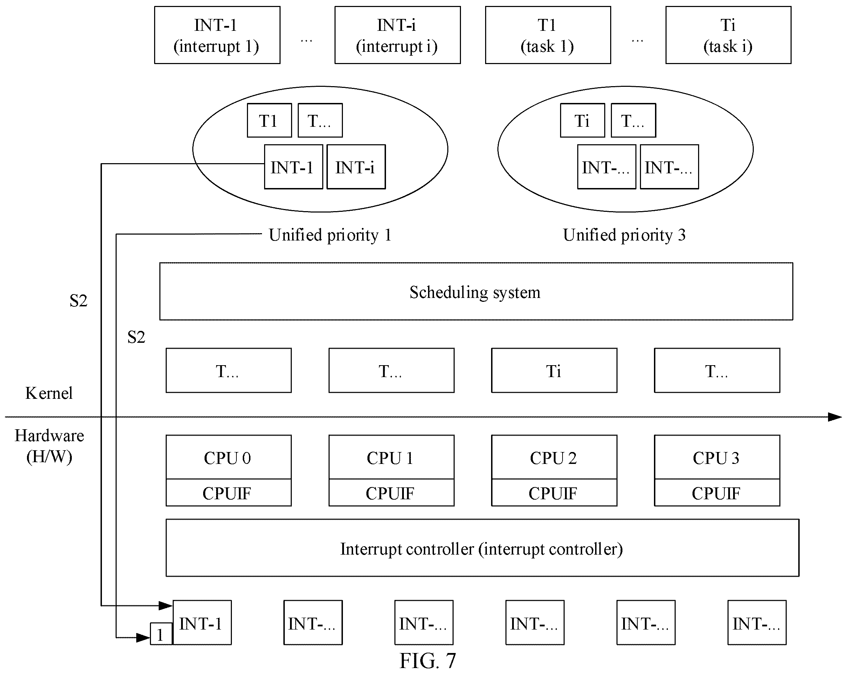

For example, as shown in FIG. 7, the system has created one or more unified priorities. The system may manually or automatically assign and set unified priorities for tasks and interrupts dynamically as required. Generally, one or more critical tasks or interrupts are selected from the system. Corresponding unified priorities may be assigned to the critical tasks or interrupts as required. Other (or unassigned) tasks and interrupts may be processed by default as required. For example, unified priorities are not assigned to the other (or unassigned) tasks and interrupts, or the default unified priority is assigned to the other (or unassigned) tasks and interrupts. When an interrupt is initialized, a data structure of the interrupt needs to be able to indicate a unified priority of the interrupt. When the system initializes the interrupt, the unified priority is used as an interrupt priority for initializing the interrupt. Generally, there is no special requirement. This process is a one-off process. Specifically, when a task is initialized, a data structure of the task also needs to be able to indicate a unified priority of the task. When the task is initialized, the task is initialized based on the unified priority assigned to the task. In a dynamic configuration environment, the unified priority may be set for a plurality of times, depending on running conditions. In a static configuration environment, setting a unified priority of a task is generally a one-off operation. In addition, it is ensured that the system has an idle-state task (Idle task) or a similar task, and a corresponding unified priority is set, to ensure that the system can be restored to a hardware priority at an idle level.

In some embodiments, the scheduling module 201 is further configured to: determine the target task from the N tasks, and determine, from the at least one processor core, the target processor core 203 for the target task; and schedule the target task to the target processor core 203.

Specifically, the scheduling module 201 may determine, from a plurality of tasks based on priorities corresponding to the tasks, the target task that needs to be preferentially scheduled, and may select one from a plurality of processor cores as the target processor core 203 for running the target task, thereby improving system performance and stability.

In some embodiments, the target processor core 203 includes a priority register, and the target processor core 203 is further configured to configure the priority corresponding to the target task into the priority register.

Specifically, the processor core includes a priority register, and the priority register may be configured to store a priority of a task currently run by the processor core, so that when receiving an interrupt in a task running process subsequently, the processor core can determine importance of the interrupt and the task, and determine whether the interrupt can interrupt the currently running task, thereby ensuring integrity of running of the critical task and improving system performance and stability.

It should be noted that, after unified priorities are assigned to interrupts and tasks, the scheduling system may use conventional task priorities. Logic of a conventional task priority remains unchanged, and may still be used as a fine-grained priority for task scheduling, for example, entering or exiting a run queue. The scheduling system may also use a new unified priority to represent a coarse-grained criticality level, for example, determine, based on the criticality level, whether A preempts B.

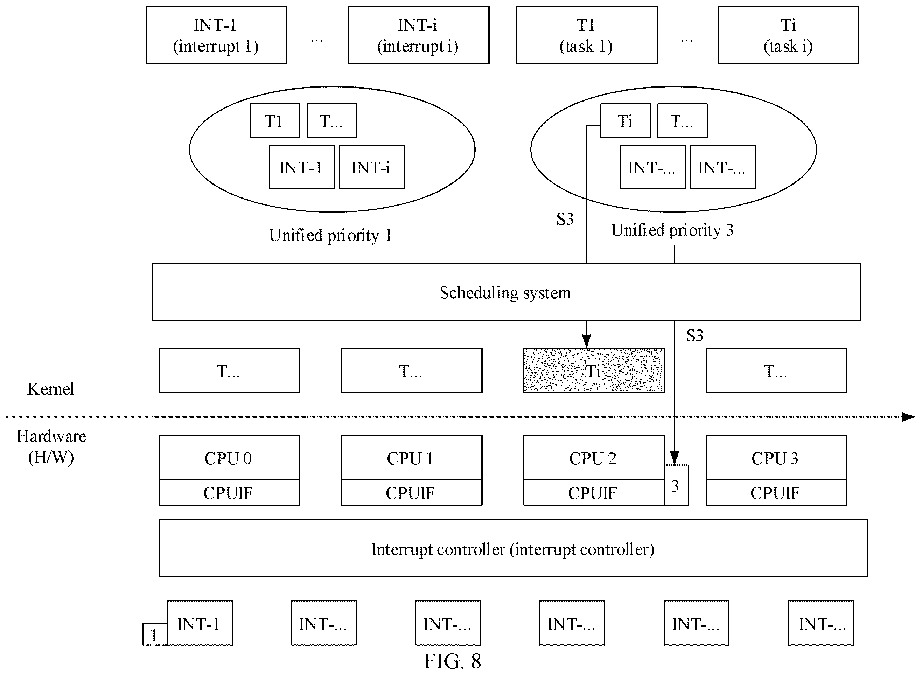

For example, as shown in FIG. 8, a smaller value indicates a lower priority. The scheduling system may select a task from a plurality of tasks for execution. In addition, the scheduling system also selects one CPU from a plurality of CPUs as a target CPU to execute the selected task. Further, whether a hardware priority of the target CPU is consistent with a unified priority of the task may be checked. If the hardware priority of the target CPU is consistent with the unified priority of the task, no change is made (skipped); or if the hardware priority of the target CPU is inconsistent with the unified priority of the task, the unified priority of the task is used as the hardware priority of the target CPU.

In some embodiments, the target processor core 203 is further configured to: when the target interrupt is received, compare the priority corresponding to the target interrupt with a priority currently stored in the priority register; and if the priority corresponding to the target interrupt is higher than the priority currently stored in the priority register, the priority corresponding to the target interrupt is higher than the priority corresponding to the target task; or if the priority corresponding to the target interrupt is lower than or equal to the priority currently stored in the priority register, the priority corresponding to the target interrupt is lower than or equal to the priority corresponding to the target task.

Specifically, when the interrupt is received in a process of running the target task, the target processor core may compare the priority corresponding to the interrupt with the priority currently stored in the priority register, to determine importance of the interrupt and the currently running task, and then determine whether the interrupt can interrupt the currently running task, thereby ensuring integrity of running of the critical task and improving system performance and stability.

In some embodiments, the target processor core 203 is specifically configured to: if the priority corresponding to the target interrupt is higher than the priority corresponding to the target task, update, to the priority register, the priority corresponding to the target interrupt; and suspend the target task and run the target interrupt.

Specifically, when the target processor core receives the interrupt in the process of running the target task, and the priority corresponding to the interrupt is higher than the priority corresponding to the target task, it indicates that importance of the interrupt is higher than importance of the target task, and that the interrupt can interrupt the currently running target task. Then the priority corresponding to the interrupt may be updated to the priority register of the target processor core, and the target processor core suspends the target task and runs the interrupt, to ensure that the interrupt is not interrupted by another interrupt with a lower priority or a same priority in a process of running the interrupt, thereby ensuring logic correctness and improving system performance and stability.

In some embodiments, after the target processor core 203 runs the target interrupt, the target processor core 203 is further configured to restore the priority in the priority register to the priority corresponding to the target task, and continue to run the target task.

Specifically, after running the interrupt, the target processor core may restore the priority in the priority register to the priority corresponding to the target task, and then continue to run the target task, so that when a newly generated interrupt is received again in a subsequent process of running the target task, the target processor core may compare a priority corresponding to the newly generated interrupt with the priority currently stored in the priority register, to determine importance of the newly generated interrupt and the currently running task, and then determine whether the newly generated interrupt can interrupt the currently running task, thereby ensuring integrity of running of the critical task and improving system performance and stability.

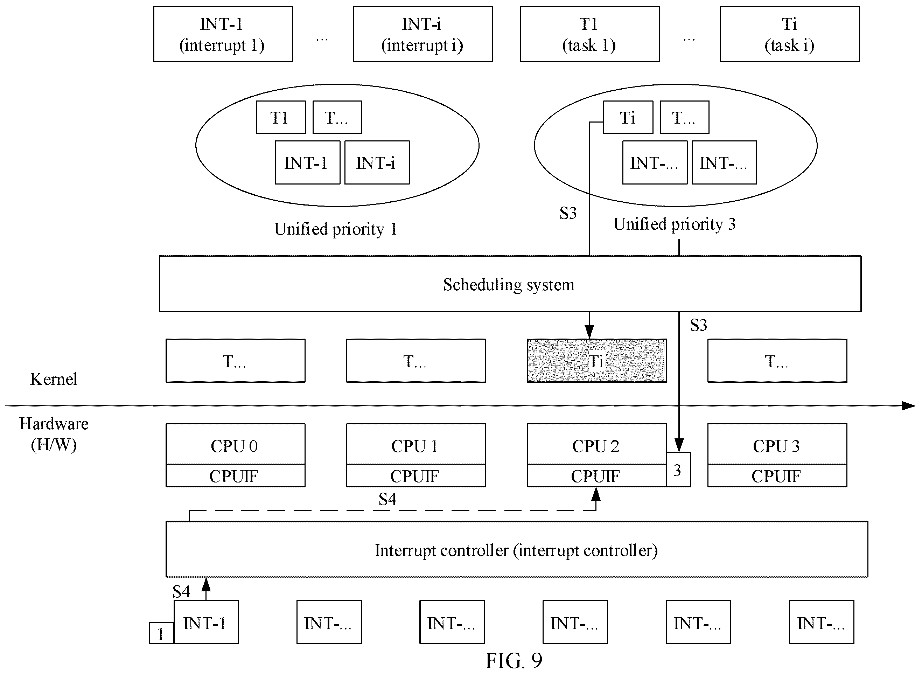

It may be understood that if an interrupt enters when the system is running a task, whether the interrupt interrupts the running task depends on which of the interrupt and the running task has a higher priority. For example, as shown in FIG. 9, the system runs a task Ti on a CPU 2, and a unified priority of the task Ti is UP3. An interrupt INT-1 with a unified priority of UP1 (assuming that the interrupt is bound to the CPU 2) enters and is forwarded to a CPUIF interface of the CPU 2 (as shown in S4 in FIG. 9). Further, the scheduler sets a hardware priority of the CPU 2 to an equivalent unified priority 3. The running task Ti on the CPU 2 has a higher priority than the incoming INT-1. Therefore, the interrupt INT-1 waits in a queue. After the CPU 2 completes the task Ti, the CPU 2 determines to execute the interrupt INT-1 or another task whose unified priority is higher than that of the interrupt INT-1 in the queue when the scheduler switches to a next task.

In some embodiments, the target processor core 203 is further configured to set the priority in the priority register to a lowest priority when the target processor core 203 runs an idle task.

Specifically, when the target processor core is in an idle state, the target processor core may run the idle-state task, and may set the priority in the priority register in the target processor core to the lowest priority, so that any interrupt can interrupt the currently running idle-state task, thereby improving system performance and stability. For example, to ensure that each CPU in the system has an idle task or a similar task, a unified priority at the idle level may be set for the task, to ensure that the CPU can be restored to a state in which an interrupt can be accepted.

In some embodiments, the target processor core 203 is further configured to: when the target processor core 203 runs the target interrupt, if an end-of-interrupt instruction is received, after retaining, within a preset time period, the priority corresponding to the target interrupt in the priority register, restore the priority in the priority register to the priority corresponding to the target task.

Specifically, when the interrupt system uses a preemptive end-of-interrupt program (End of Interrupt, EOI) to handle an interrupt service routine (interrupt service routine, ISR), the interrupt priority ends when the EOI is completed. Therefore, the ISR may be preempted by another interrupt with a same priority or a lower priority within this window period. Therefore, the system may determine, based on the configuration, whether to retain the unified priority of the interrupt after the EOI, so that the interrupt is not interrupted by an interrupt or a task with a same priority or a lower priority within the window period. This ensures correctness and consistency of the priority during the overall interrupt handling.

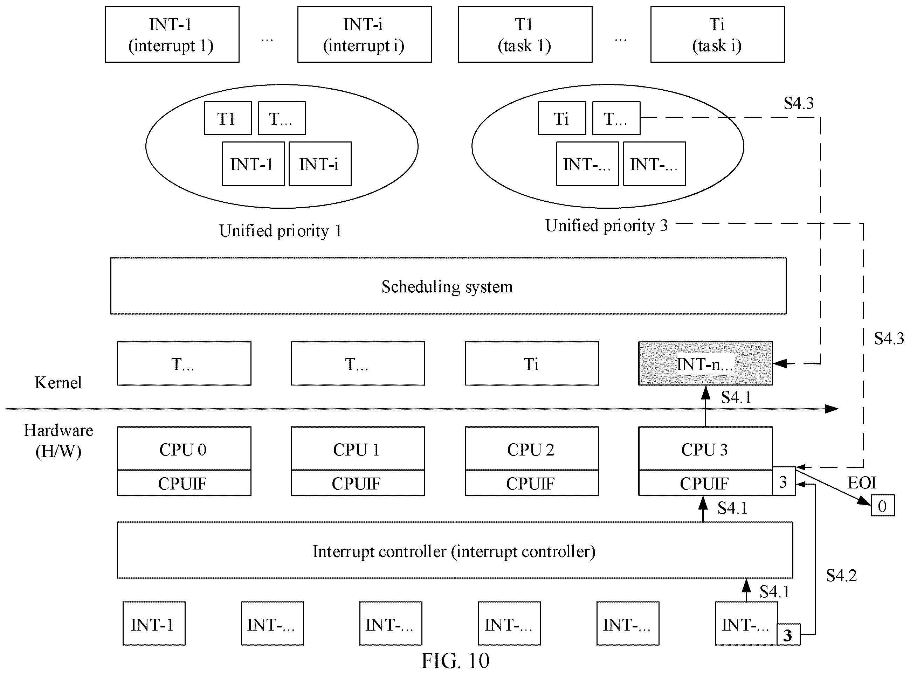

For example, as shown in FIG. 10, after the interrupt is activated, the system waits for or preempts the running task of the target CPU according to a unified priority rule; when preemption occurs, the scheduling system sets the hardware priority of the target CPU based on the unified priority of the interrupt, as shown in S4.2 in FIG. 10; and then the ISR implements priority retaining. Optionally, based on a design requirement, the scheduler may be enabled to perceive running of the ISR.

In some embodiments, the target interrupt includes indication information, and the indication information indicates the target processor core to run a first task, where a priority corresponding to the first task is higher than the priority corresponding to the target task, or a priority corresponding to the first task is lower than or equal to the priority corresponding to the target task, and the first task is one of the N tasks.

Specifically, if an interrupt with a high priority carries information indicating running of a task with a low priority, the processor core still retains the priority corresponding to the interrupt, and runs the task with the low priority, thereby reducing unnecessary interruptions of a critical service, and improving system performance and stability. Different from the foregoing ISR, an interrupt service thread (Interrupt Service Thread, IST) itself is schedulable. However, a potential problem is that the IST does not inherit the interrupt priority. Therefore, there is a possibility that the IST is repeatedly interrupted by other interrupts with the same priority or lower priority, resulting in unbounded interruptions. Therefore, based on a requirement, the system can be configured to determine whether to run the IST to inherit the unified priority of the interrupt when the unified priority of the target IST is lower than that of the interrupt, to improve logic correctness and consistency of an interrupt handler.

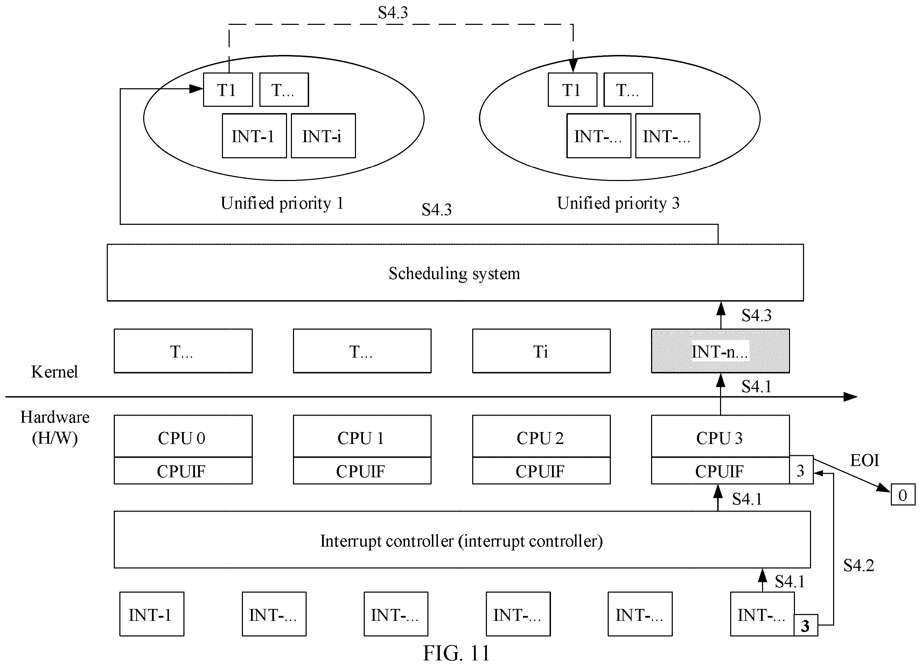

For example, as shown in FIG. 11, after the interrupt is activated, the system waits for or preempts the running task of the target CPU according to the unified priority rule; when preemption occurs, the scheduling system sets the hardware priority of the target CPU based on the unified priority of the interrupt, as shown in S4.2 in FIG. 11; and after the target IST is located, if the unified priority of the target IST is lower than the priority of the interrupt (for example, a task that is not assigned a unified priority by default), the IST may be selected, based on the configuration, to inherit the unified priority of the interrupt, as shown in S4.3 in FIG. 11.

In summary, in this application, interrupts and tasks are marked by using unified priorities. If a priority corresponding to an interrupt is lower than or equal to the priority corresponding to the target task, the interrupt cannot interrupt the currently running task. The interrupt can interrupt the currently running task only when a unified priority corresponding to the interrupt is higher than the priority corresponding to the target task. In this way, integrity of running of a critical task is ensured. In the conventional technology, tasks and interrupts use independent priorities, and a priority of an interrupt is higher than a priority of any task by default. The interrupt can interrupt any running task, causing a problem that the interrupt unconditionally preempts a running critical task, and resulting in poor system stability. In this application, because tasks and interrupts are marked by using unified priorities, and only an interrupt with a priority higher than that of a task can interrupt the task, the interrupt does not arbitrarily interrupt a running critical task. In this way, a problem that an interrupt preempts any running task and prolongs an overall processing cycle of the critical task is resolved, and system performance and stability are improved.

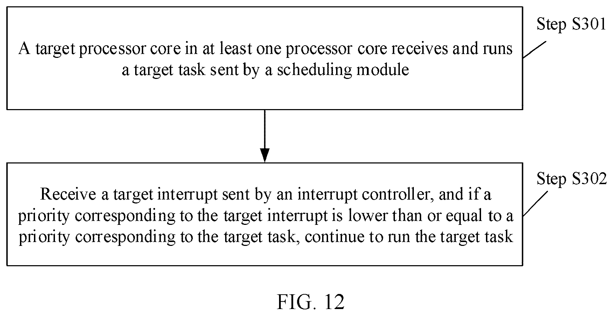

With reference to FIG. 12, this application provides a task execution scheduling method, applied to a computing apparatus. The computing apparatus includes a scheduling module, an interrupt controller, and at least one processor core. The scheduling module is configured to schedule N tasks. The interrupt controller is configured to schedule M interrupts. The N tasks and the M interrupts are marked by using unified priorities, one task corresponds to one priority, one interrupt corresponds to one priority, and M and N are integers greater than 0. The following describes the method in detail.

Step S301: A target processor core in the at least one processor core receives and runs a target task sent by the scheduling module.

Specifically, the target task is one of the N tasks.

Step S302: Receive a target interrupt sent by the interrupt controller, and if a priority corresponding to the target interrupt is lower than or equal to a priority corresponding to the target task, continue to run the target task.

Specifically, the target interrupt is one of the M interrupts.

In some embodiments, if the priority corresponding to the target interrupt is higher than the priority corresponding to the target task, the target processor core suspends the target task and runs the target interrupt.

In some embodiments, the scheduling module determines the target task from the N tasks, and determines, from the at least one processor core, the target processor core for the target task; and schedules the target task to the target processor core.

In some embodiments, the target processor core includes a priority register, and the method further includes: The target processor core configures the priority corresponding to the target task into the priority register.

In some embodiments, when the target interrupt is received, the target processor core compares the priority corresponding to the target interrupt with a priority currently stored in the priority register; and if the priority corresponding to the target interrupt is higher than the priority currently stored in the priority register, the priority corresponding to the target interrupt is higher than the priority corresponding to the target task; or if the priority corresponding to the target interrupt is lower than or equal to the priority currently stored in the priority register, the priority corresponding to the target interrupt is lower than or equal to the priority corresponding to the target task.

In some embodiments, if the priority corresponding to the target interrupt is higher than the priority corresponding to the target task, that the target processor core suspends the target task and runs the target interrupt includes: If the priority corresponding to the target interrupt is higher than the priority corresponding to the target task, the target processor core updates, to the priority register, the priority corresponding to the target interrupt; and the target processor core suspends the target task and runs the target interrupt.

In some embodiments, after the target processor runs the target interrupt, the target processor core restores the priority in the priority register to the priority corresponding to the target task, and continues to run the target task.

In some embodiments, when the target processor core runs an idle task, the target processor core sets the priority in the priority register to a lowest priority.

This application provides a computer storage medium. The computer storage medium stores a computer program. When the computer program is executed by a processor, any one of the foregoing task execution scheduling methods is implemented.

An embodiment of this application provides an electronic device. The electronic device includes a processor. The processor is configured to support the electronic device in implementing corresponding functions in any one of the foregoing task execution scheduling methods. The electronic device may further include a memory. The memory is coupled to the processor, and configured to store program instructions and data that are necessary for the electronic device. The electronic device may further include a communication interface, used for communication between the electronic device and another device or a communication network.

This application provides a chip system. The chip system includes a processor configured to support an electronic device in implementing the foregoing functions, for example, generating or processing information in any one of the foregoing task execution scheduling methods. In a possible design, the chip system further includes a memory. The memory is configured to store program instructions and data that are necessary for the electronic device. The chip system may include a chip, or may include a chip and another discrete component.

This application provides a computer program product. The computer program includes instructions. When the computer program is executed by a computer, the computer is enabled to perform any one of the foregoing task execution scheduling methods.

In the foregoing embodiments, the description of each embodiment has a respective focus. For a part that is not described in detail in an embodiment, refer to related descriptions in other embodiments.

It should be noted that, for brief description, the foregoing method embodiments are represented as a series of actions. However, persons skilled in the art should appreciate that this application is not limited to the described order of the actions because some steps may be performed in other orders or simultaneously according to this application. It should be further appreciated by persons skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like, and may be specifically a processor in the computer device) to perform all or some of the steps of the methods described in embodiments of this application. The foregoing storage medium may include any medium that can store program code, such as a USB flash drive, a removable hard disk, a magnetic disk, an optical disc, a read-only memory (Read-Only Memory, ROM for short), or a random access memory (Random Access Memory, RAM for short).

The foregoing embodiments are merely intended for describing the technical solutions of this application rather than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A computing apparatus, wherein the computing apparatus comprises a scheduling module, an interrupt controller, and at least one processor core, wherein the scheduling module is configured to schedule N tasks, the interrupt controller is configured to schedule M interrupts, the N tasks and the M interrupts are marked by using unified priorities, one task corresponds to one priority, one interrupt corresponds to one priority, and M and N are integers greater than 0; and
a target processor core in the at least one processor core is configured to:
receive and run a target task sent by the scheduling module, wherein the target task is one of the N tasks; and
receive a target interrupt sent by the interrupt controller, and if a priority corresponding to the target interrupt is lower than or equal to a priority corresponding to the target task, continue to run the target task, wherein the target interrupt is one of the M interrupts.

2. The computing apparatus according to claim 1, wherein the target processor core is further configured to:
if the priority corresponding to the target interrupt is higher than the priority corresponding to the target task, suspend the target task and run the target interrupt.

3. The computing apparatus according to claim 1 or 2, wherein the scheduling module is further configured to:
determine the target task from the N tasks, and determine, from the at least one processor core, the target processor core for the target task; and
schedule the target task to the target processor core.

4. The computing apparatus according to any one of claims 1 to 3, wherein the target processor core comprises a priority register, and the target processor core is further configured to:
configure the priority corresponding to the target task into the priority register.

5. The computing apparatus according to claim 4, wherein the target processor core is further configured to:
when the target interrupt is received, compare the priority corresponding to the target interrupt with a priority currently stored in the priority register; and
if the priority corresponding to the target interrupt is higher than the priority currently stored in the priority register, the priority corresponding to the target interrupt is higher than the priority corresponding to the target task; or
if the priority corresponding to the target interrupt is lower than or equal to the priority currently stored in the priority register, the priority corresponding to the target interrupt is lower than or equal to the priority corresponding to the target task.

6. The computing apparatus according to claim 4 or 5, wherein the target processor core is specifically configured to:
if the priority corresponding to the target interrupt is higher than the priority corresponding to the target task, update, to the priority register, the priority corresponding to the target interrupt; and
suspend the target task and run the target interrupt.

7. The computing apparatus according to claim 6, wherein after the target processor runs the target interrupt, the target processor core is further configured to:
restore the priority in the priority register to the priority corresponding to the target task, and continue to run the target task.

8. The computing apparatus according to any one of claims 4 to 7, wherein the target processor core is further configured to:
when the target processor core runs an idle task, set the priority in the priority register to a lowest priority.

9. The computing apparatus according to any one of claims 4 to 8, wherein the target processor core is further configured to:
when the target processor core runs the target interrupt, if an end-of-interrupt instruction is received, after retaining, within a preset time period, the priority corresponding to the target interrupt in the priority register, restore the priority in the priority register to the priority corresponding to the target task.

10. The computing apparatus according to any one of claims 4 to 9, wherein the target interrupt comprises indication information, and the indication information indicates the target processor core to run a first task, wherein a priority corresponding to the first task is higher than the priority corresponding to the target task, or a priority corresponding to the first task is lower than or equal to the priority corresponding to the target task, and the first task is one of the N tasks.

11. A task execution scheduling method, applied to a computing apparatus, wherein the computing apparatus comprises a scheduling module, an interrupt controller, and at least one processor core, wherein the scheduling module is configured to schedule N tasks, the interrupt controller is configured to schedule M interrupts, the N tasks and the M interrupts are marked by using unified priorities, one task corresponds to one priority, one interrupt corresponds to one priority, and M and N are integers greater than 0; and the method comprises:
receiving and running, by using a target processor core in the at least one processor core, a target task sent by the scheduling module, wherein the target task is one of the N tasks; and
receiving a target interrupt sent by the interrupt controller, and if a priority corresponding to the target interrupt is lower than or equal to a priority corresponding to the target task, continuing to run the target task, wherein the target interrupt is one of the M interrupts.

12. The method according to claim 11, wherein the method further comprises:
if the priority corresponding to the target interrupt is higher than the priority corresponding to the target task, suspending, by using the target processor core, the target task, and running the target interrupt.

13. The method according to claim 11 or 12, wherein the method further comprises:
determining, by using the scheduling module, the target task from the N tasks, and determining, from the at least one processor core, the target processor core for the target task; and
scheduling the target task to the target processor core.

14. The method according to any one of claims 11 to 13, wherein the target processor core comprises a priority register, and the method further comprises:
configuring, by using the target processor core, the priority corresponding to the target task into the priority register.

15. The method according to claim 14, wherein the method further comprises:
when the target interrupt is received, comparing, by using the target processor core, the priority corresponding to the target interrupt with a priority currently stored in the priority register; and
if the priority corresponding to the target interrupt is higher than the priority currently stored in the priority register, the priority corresponding to the target interrupt is higher than the priority corresponding to the target task; or
if the priority corresponding to the target interrupt is lower than or equal to the priority currently stored in the priority register, the priority corresponding to the target interrupt is lower than or equal to the priority corresponding to the target task.

16. The method according to claim 14 or 15, wherein if the priority corresponding to the target interrupt is higher than the priority corresponding to the target task, suspending, by using the target processor core, the target task, and running the target interrupt comprise:
if the priority corresponding to the target interrupt is higher than the priority corresponding to the target task, updating, to the priority register by using the target processor core, the priority corresponding to the target interrupt; and
suspending, by using the target processor core, the target task, and running the target interrupt.

17. The method according to claim 16, wherein after the target processor runs the target interrupt, the method further comprises:
restoring, by using the target processor core, the priority in the priority register to the priority corresponding to the target task, and continuing to run the target task.

18. The method according to any one of claims 14 to 17, wherein the method further comprises:
when the target processor core runs an idle task, setting, by using the target processor core, the priority in the priority register to a lowest priority.

19. A computer storage medium, wherein the computer storage medium stores a computer program, and when the computer program is executed by a processor, the method according to any one of claims 11 to 18 is implemented.

20. A computer program product, wherein the computer program comprises instructions, and when the computer program is executed by a computer or a processor, the computer or the processor is enabled to perform the method according to any one of claims 11 to 18.
